# EUROPEAN PATENT APPLICATION

(11) **EP 4 660 987 A1**
(43) Date of publication of application: **10.12.2025**
(21) Application number: 24221219.9
(22) Date of filing: 18.12.2024
(51) Int. Cl.: G09B 23/26

(54) **A REVERSIBLY DEFORMABLE DNA DEMONSTRATOR**

(30) Priority: 06.06.2024 SK 500352024
(71) Applicant: Ustav polymerov Slovenskej akademie vied, verejna vyskumna institucia, 845 41 Bratislava - Karlova Ves (SK)
(72) Inventor: Racko, Dusan, 956 05 Radosina (SK); Spitalsky, Zdenko, 841 07 Bratislava (SK); Podhradska, Silvia, 903 01 Bratislava - Staré Mesto (SK)
(74) Representative: Majlingová, Zuzana

(57) **Abstract**

A reversibly deformable DNA demonstrator, which contains the body in the form of 3D double-helix structure representing part of a DNA molecule; where the body contains an elastic material that, at the temperature of 25 °C, has shear modulus of *G* = 0.1 MPa to 50 MPa with the transverse to longitudinal deformation ratio expressed via Poisson's constant *v* in the range of 0.3 to 0.5, and wherein the elastic material is in the form of a set of touching and/or at least partially overlapping spheres representing the atoms of the DNA molecule, ensuring the demonstrator's self-supporting structure. The demonstrator has the width to length ratio of one DNA turn in 3D double-helical structure in the range from 1:1.4 to 1:1.8. The method for the demonstrator production is the subject matter of the invention.

## Description

### Technical Field

The invention relates to a teaching aid or a toy and their production.

### Background Art

Existing DNA models do not enable to demonstrate real characteristics of DNA. DNA is a dextrorotatory double-helix. Semi-flexibility and torsional stiffness of DNA molecule are its special characteristics. These characteristics are responsible for the molecule deformation upon mechanical stress. The deformations are uneven, as DNA is chiral and lacks the axis of symmetry. Upon deformation genetic information is revealed, which can be fatal. However, the deformations provide also biological functions, such as making DNA accessible for proteins and a molecular machinery, which functions are inevitable for securing of DNA biologic functions. Due to its length DNA, is also densely packed in the cell nuclei, and this dense packing is also associated with the deformations.

DNA is subjected to the biophysical processes, and these processes are investigated by means molecular simulations. The formulating of molecular simulation models is not a trivial procedure and it frequently uses the aid of physical analogue models. Due to the double-helical structure of DNA and its ability to accumulate torsional stress, many scientific groups engaged in DNA research adopted the use of rubber tube models. Using of the rubber tube model is established and useful, but it has its limitations. For example, the models are perfectly symmetric regardless of the twisting direction.

Current models often represent the DNA molecule as levorotatory, which is not true. Furthermore, they do not show the alternation of the major and minor grooves. Another disadvantage of the current models is that they showcase incorrect base number per turn of DNA, or only one half-turn of DNA, instead of the complete turn.

Models are torsionally symmetrical and cannot assist in forming ideas about relations between structure and mechanics of DNA on its helical level.

The simple physical analogue model is not able to distinguish between overwound and underwound DNA via silicon rubber tubes.

Further disadvantage resides in the fact that the known models are rigid ones, built around a metal rod support preventing the illustration of the structural changes of DNA double-helix (twisting and un-twisting).

The aim of this invention is providing of the reversibly deformable DNA demonstrator which does not have the above mentioned disadvantages of the prior art, and enabling the demonstration of various spatial and, to some extent, also mechanical properties of the DNA structure.

### Summary of Invention

The key structural characteristics of DNA include the bending stiffness, torsional stiffness, twist, writhe, and the total linking number, while the each of the characteristics plays the key role in the dynamic behavior of this fundamental molecule. These characteristics of the DNA molecule can be showcased/demonstrated on the reversibly deformable DNA demonstrator (hereafter the demonstrator) according to the invention.

The demonstrator is the realistic replica of the appearance of DNA. The reversibly deformable DNA demonstrator can be also an educational tool of DNA mechanics taking into account the structure of two building strands of DNA. In the same time the demonstrator can be used as a practical aid in the development of the computer DNA models.

The demonstrator according to the invention can advantageously be made in two forms, the long one, and the short one. The long form of the demonstrator enables demonstration of the supercoiling and knotting of double-helix DNA molecule, while the short form represents a chosen and enlarged/zoomed segment, where the DNA structure is more clearly visible.

The first aspect of the invention is the reversibly deformable DNA demonstrator comprising the body in the form of 3D double-helical structure representing the part of DNA molecule. The body contains an elastic material, at temperature of 25 °C, having shear modulus, *G*, between *G* = 0,1 MPa to 50 MPa with the transverse deformation to longitudinal deformation ratio expressed via Poisson constant *v* = 0.3 - 0.5, and wherein the elastic material is in the form of a set of touching and/or at least partially overlapping spheres representing the atoms.

Tensile modulus *E*, shear modulus *G* and flexural modulus *E*_{F} are linked via Poisson constant *v*. In general, the following formulas are valid: *E* = *G*(2*+*2*v*) and *E*_{F} = *E*/(1-*v*²). It means that the tensile modulus (Young's modulus) of the elastic material should be in the range of *E =* 0.1 MPa to 100 MPa, and the flexural modulus *E*_{F} should be in the range of 0.2 MPa to 200 MPa.

To illustrate the structural behavior of the DNA molecule, the DNA double helix model is advantageously made from a reversibly deformable material, which means that when a force is applied, the material deforms, but once the force is no longer applied, the material returns to its original shape.

According to the preferred embodiment, the demonstrator has the width to length ratio of one turn in 3D structure of the double-helix (rise of the helix) in the range from 1 : 1.4 to 1 : 1.8, and this ratio corresponds to the real width to length ratio of one turn in the real DNA molecule. Therefore, the demonstrator preserves the physical measures of the DNA molecule. Thus, the demonstrator having the body diameter of 6 cm will have the width of a turn of 6 cm and the height of one turn from 8.4 cm to 10.8 cm.

Wherein the width of a turn is the diameter of DNA helix and the height of one turn is defined as the distance between two points of the helix after the twist of the helix by 360°.

The demonstrator according to the invention has the structure consisting of the spheres/overlapping spheres, which are inflated (scaled) in such an extent that they touch or overlap each other, and thus enable self-support of the demonstrator while keeping the bond lengths unchanged. These overlapping spheres represent the individual atoms of the DNA chemical structure. The scaling factor is in the range of 1 to 3, ideally 1.5. This approach has also physical background and substantiation, since the atoms behave as soft overlapping balls in reality. According to an advantageous embodiment, the percentage of overlap between adjacent spheres is 5% to 90%, preferably 20% to 80%, most preferably 50% to 70%.

In nature, the diameter of the DNA double-helix is about two nanometers. Thus, the demonstrator having the diameter of two centimeters represents the enlargement of the real DNA structure in the ratio of 1 : 10,000,000. Similarly, the model having the width of 6 cm is the real DNA structure enlargement in the ratio of 1 : 30,000,000 (2 nm/6 cm).

According to another preferred embodiment, the body contains at least 90 % of the elastic material, preferably 100 % of the elastic material.

According to another preferred embodiment, the body of the demonstrator is solid, or it contains a small air channel running through the center of the body, or the body is hollow to the extent it keeps its ability to be self-supporting.

According to the other referred embodiment, the demonstrator contains at least one handle fixed at one end of the body to facilitate the manipulation with the demonstrator. Advantageously, it contains two handles, one at each end of the demostrator's body.

Preferably the body is made from silicone, caoutchouc, natural latex, rubber, polyurethane rubber, cross-linking elastic polymers, thermoplastic elastomers, nitrile butadiene rubber, polyethylene vinylacetate, acrylonitrile butadiene styrene, polyisoprene, ethylene propylendiene monomer, soft PVC. Preferably, the DNA demonstrator is made from silicone, more preferably from silicone2, which additionally contains crosslinking agents and additives like dyes and pigments.

According to the preferred embodiment, the body of the reversibly deformable DNA demonstrator has a length of 10 cm to 3,000 cm and the diameter (cross-section) of 0.5 cm to 7 cm, and the width-to-length ratio for one turn being is 1 : 1.6.

In principle, the smaller the diameter of the demonstrator's body, the greater the shear modulus the elastic material of the demonstrator should have. With the demonstrator having the body diameter up to 5 cm the preferred shear modulus (modulus of rigidity) is in the range from *G* = 1 MPa to 50 MPa, and with the demonstrator having the body diameter at least 5 cm the preferred shear modulus (modulus of rigidity) is in the range from *G* = 0.1 MPa to 10 MPa.

In accordance with the preferred embodiment, the short form of the demonstrator can have the length from 20 cm to 30 cm, preferably 25 cm, with the body diameter in the range from 5 cm to 7 cm, preferably 6 cm, and wherein the body consists of the material having the shear modulus (modulus of rigidity) in the range from *G* = 0.1 MPa to 1 MPa, preferably from *G* = 0.1 MPa to 0.5 MPa.

In accordance with the other preferred embodiment, the long form of the demonstrator can have the length from 100 cm to 200 cm, preferably 150 cm, with the body diameter in the range from 1 cm to 3 cm, preferably 2 cm, and wherein the body consists of the material having the shear modulus in the range from 1 MPa to 50 MPa, preferably from 1 MPa to 10 MPa.

Calculation of the number of turns in relation to the length and diameter of the body of the reversibly deformable DNA demonstrator: With the diameter of 1 cm and the length of 1 meter, the number of the DNA turns will equal to 1 m/(3.4 nm * 1 cm/2 nm) = 58 turns, and with the model having the diameter of 6 cm and the length of 1 meter, the number of turns will be 1/(3.4 nm * 6 cm/2 nm) = 9.8 turns.

The body of the demonstrator according to this invention can also be expressed mathematically by parametric equations *x*₁(t) = *R* · cos (*t*) and *y*₁(*t*) = *R* · sin (*t*) and z₁(*t*) = *Pt* for one helix strand, and equations *x*₂(*t*) = *R* · cos (*t* + *ϕ*) and *y*₂(*t*) = *R* · sin (*t* + *ϕ*) and *z*₂(*t*) = *Pt + Δz* for the other helix strand, wherein *R* is the distance of the atoms of the base pair from the axis of windidng, *t* is a periodic parameter in the range of *N*_{ot.}·(0 - 2π) with *N*_{ot.} representing the number of turns, *P* is the pitch of the spiral given as *H*/2π, wherein *H* is the height of one DNA turn, *ϕ* and represents the phase shift between the strands, which has a value different from π, or *ϕ* is represented by the pitch parameter Δ*z*, wherein Δ*z* ≠ π· *P* and *ϕ* = 0.

In the DNA double helix, the average distance between the strands forming the major groove is half the height of one turn (3.4 nm/2). The strands forming the minor groove exhibit a smaller gap, with approximate values ranging from 0.5 to 1.2 nm. Therefore, the preferred values for Δ*z* are Δ*z* = from 0.3· *π · P* to *Δz* = 0.7· *π*· *P*

The basic parameter for the determination of the range of P(pitch) is the height of one turn of 3.4 nm, but at the enlargement of the 3D structure in the reversibly deformable demonstrator at the ratio of 1 : 10,000,000 it is 3.4 cm, or 10.2 cm at the ratio of 1 : 30,000,000.

The parameter *R* in the parametric equation given above, the parameter represents the distance of the corresponding atom from the axis of winding. *R* varies for each atom forming a base pair, and the corresponding *R* must either be calculated from crystallographic data or generated based on the known chemical structure of the base pair. This principle is used by software that can generate any double helix based on an input sequence, such as ATGC.

The torsional stress of the DNA molecule is represented by the relation between the twist number Tw and the writhe number Wr, as Lk =Tw + Wr, yielding total linking number. In principle, in the DNA molecule the ratio between Tw : Wr is 1 : 3. In accordance with the preferred embodiment, the demonstrator of the present invention reproduces the torsional mechanical properties of the DNA molecule, wherein Tw : Wr = from 1 : 2 to 5, preferably 1 : 3.

The demonstrator according to this invention allows for a shortening/lengthening of the body by 10 to 50% of its length during normal manipulation by hand, such as twisting or unwinding, preferably by 20% to 40% of its length. The short form of the demonstrator can be twisted by 120-360 degrees, corresponding to three full turns of the double helix.

The second aspect of the present invention is the method of producing the reversibly deformable DNA demonstrator according to the present invention, and the method includes the following steps:
- selection of the 3D structure of the DNA molecule double-helix;
- the selected 3D structure is enlarged in the ratio from 1 : 10,000,000 to 1 : 30,000,000;
- the diameter of the atoms in 3D structure of the selected DNA molecule is enlarged by the application of the scaling factor in the range from 1 to 3, preferably 1.5;
- if needed, the DNA structure format is converted to the format suitable for a 3D printer;
- the enlarged and rescaled 3D structure is printed on the 3D printer providing the model for the mold for the production of the reversible deformable DNA demonstrator;
- the mould for the producing of the reversibly deformable DNA demonstrator is created;
- the reversibly deformable DNA demonstrator is produced by the casting into the mould.

### Creation of the mould:

Preparation of the object for casting: Printed 3D DNA structure is cleaned as needed. In case of the structure printed from PLA it is possible to use acetone to smooth out unevenness. After cleaning the releasing agents, such as silicon oil, can be applied to the printed DNA object, and this releasing agent facilitates the removing of the DNA template from the solidified mould.

Preparation of the container for casting: During the casting the supporting container or the outer mould, into which the casting material is poured, are needed. The container can be made of the paperboard, plastic, boards, or a plastic or metal vessel can be used. The container should be sufficiently strong to hold the liquid casting mixture of the required volume and to support several kilograms of the liquid. The volume should be adequate to ensure the optimal consumption of the casting material.

Mixing the casting material: Follow the instruction of the manufacturer for the mixing of the casting material. Typically, this involves combining two or more compounds in the correct proportions. If necessary, calibrated vessels are used to ensure the precise mixing. The proportional amount of the cross-linking agent determines the material's hardness after the solidification. Considering the unevenness of the casting DNA object, it is important to ensure the template can be easily removed from the solidified mold without damaging or dissolving the printed DNA template.

The suitability of the mixing ratio between the agent and the cross-linked material used to be pre-determined by the casting of a small piece of material, for example in the matchbox, and testing of the material behavior.

Pouring the casting material: Carefully pour the mixed forming material into the container or supporting bin. Pouring of the material will be carried out in several steps. At first a layer of several centimeters is poured, and the layer will form a solid wall of the mould. Then, place the DNA template into the container with the solidified layer and pour the liquid up to halfway the width of the DNA. After solidification, spray the inner part of the container with a release agent (e.g., silicone oil) and pour the casting material to a height of several centimeters above the DNA template. This process will create a two-part mold.

Removing of the air bubbles: To prevent forming of the air bubbles in the mould, it is possible to tap the container on the bench or to use a vibratory support or an agitator. It is preferred, if a vacuum chamber - vacuum oven - is available, and the vacuum chamber has a volume required for putting the container into it, and it is warmed to 50°C - 60°C. Higher temperature enables faster solidification, and the vacuum accelerates removing of the bubbles (their boiling away).

Removing from the mould: After the complete solidification of the forming material, the mould is carefully removed from the container or from the supporting bin. Using of the plastic vessel (for example food vessel) ensures sufficient flexibility of the container required for the eventual manipulation with the container during the removing of the mould. Afterwards the DNA template is removed from the mould. Finishing and finalization: The final mould can be smoothed by a slitting knife, scalpel or scissors. Before using of the mould for casting the demonstrator from elastic material, the mould can be tested with pouring plaster or wax, and eventually clean the mould subsequently.

The material of the mould can be silicone (for example Lukoprén) or polyurethane rubber.

An alternative method of producing the reversibly deformable DNA demonstrator according to the present invention contains the following steps:
- selection of the 3D structure of the DNA molecule double-helix;
- the selected 3D structure is enlarged in the ratio from 1 : 10,000,000 to 1 : 30,000,000;
- the diameter of the atoms in 3D structure of the selected DNA molecule is enlarged by the application of the scaling factor in the range from 1 to 3, preferably 1.5;
- if needed; the DNA structure format is converted to the format suitable for 3D printer;
- the enlarged and rescaling negative model of the DNA structure is printed, and thus the mould for the reversibly deformable DNA demonstrator is provided;
- the reversibly deformable DNA demonstrator is produced by the casting into the mould.

It is also possible to produce the demonstrator having long dimensions via various methods, for example:
- serially connecting the produced demonstrators via a plug-socket (male-female) mechanism,
- by 3D printing of the demonstrator, it is possible to produce the demonstrator of any length, or
- by lengthening of already cast and solidified demonstrator by the means of the continuous mould.

When the long reversibly deformable DNA demonstrator is produced by the serial association/connecting or by the lengthening via the continuous mould, it is preferred, when the sequence of the first turn and the sequence of the last turn are identical, in order to ensure seamless connecting of the DNA in the continuous mould. In the same time, one DNA turn has 10.5 base pairs. In the continuous mould the angular turn - phase- of the first and the last base pair must start at the same place, with the relative turning angle of 0°. It is suitable to use even number of the turns in the continuous mould, in order to prevent its ending with the half of the base pair.

The reversibly deformable DNA demonstrator of any length can be produced also by 3D print in the following steps:
- selection of the 3D structure of the DNA molecule double-helix;
- the selected 3D structure is enlarged in the ratio from 1 : 10,000,000 to 1 : 30,000,000;
- the diameter of the atoms in 3D structure of the selected DNA molecule is enlarged by the application of the scaling factor in the range from 1 to 3, preferably 1.5;
- if needed; the DNA structure format is converted to the format suitable for a 3D printer;
- the reversible deformable DNA demonstrator of any length is produced by 3D print.

The reversibly deformable DNA demonstrator of any length can be produced also by the following method:
- selection of the 3D structure of the DNA molecule double-helix;
- the selected 3D structure is enlarged in the ratio from 1 : 10,000,000 to 1 : 30,000,000, and the diameter of the atoms in 3D structure of the selected DNA molecule is enlarged by the application of the scaling factor in the range from 1 to 3, preferably 1.5;
- if needed, the DNA structure format is converted to the format suitable for 3D printer;
- the ends of the structure model are modified to form a plug-and-socket (male-female) mechanism;
- the enlarged and rescaled 3D structure is printed on the 3D printer providing the model for the mould for the production of the reversible deformable DNA demonstrator; and subsequently the mould for the production of the reversibly deformable DNA demonstrator is generated, or the enlarged and rescaled negative model of the DNA structure is printed, and thus the mould for the reversibly deformable DNA demonstrator is created;
- the set of the reversibly deformable DNA demonstrator is produced using the mould by the casting into the mould,
- afterwards the demonstrators are connected in series.

Another method for the producing a long demonstrator is the mould lengthening. In this process, during the creation of the mould for the reversibly deformable DNA demonstrator, a mould A is formed. Mould A can be closed, adapted for the material injection, or open at one side (the base), suitable for casting. Simultaneously, a mould B is created, which can be open at one side, adapted for the material injection, or open at both sides (bases), suitable for the casting. Mould A is used to produce the demonstrator, and the resulting demonstrator is extended by the mould B in such a way, that the end of the produced demonstrator forms the base of the mould B, and the demonstrator is made longer by the subsequent casting or injecting of the material into the mould B. Afterwards, this step is repeated for multiple times until the desired length of the DNA demonstrator is achieved.

The demonstrator's material used for both above mentioned production methods is the elastic material having, at the temperature of 25 °C, the shear modulus (modulus of rigidity) *G* = 0.1 MPa to 50 MPa, with the ratio of cross deformation to longitudinal deformation expressed via Poisson constant *v* in the range from 0.3 to 0.5. Preferably the material is silicone, caoutchouc, natural latex, rubber, polyurethane rubber, thermoplastic elastomers, nitrile butadiene rubber, polyethylene vinylacetate, acrylonitrile butadiene styrene, polyisoprene, ethylene propylendiene monomer. The most preferred material is silicone.

The segmented mould for producing the deformable DNA demonstrator of the present invention can be generated by several methods, for example:
- direct printing of the segmented mould as a negative in relation to the DNA structure model, or
- printing of the DNA structure and subsequent generation of the segmented mould as a negative relative to the structure; for example, as an injection-press, and eventual subsequent generation of the mould from the resistant (metal) material through machining, e.g. using CNC machine.

Also, another aspect of this invention is the reversibly deformable DNA demonstrator, which can be produced by one of the above-mentioned methods of production.

The individual steps of the first production method of the present invention are described in more details.

### Selection of the structure:

Preferably, the demonstrator is made using a real chemical DNA structure obtained from the crystallographic databases, and therefore it corresponds with the physical and chemical reality.

DNA structure is downloaded from (free) structure database, for example from https://www.rcsb.org/structure/1bna, or any sequence is generated using an online tool, for example from http://www.scfbio-iitd.res.in/software/drugdesign/bdna.jsp# or https://cgdnaweb.epfl.ch/, or the offline software tool is used, such as PyMol, Chimera or VMD. If the software for DNA generation is used, it is possible to generate a random sequence. However, also the specific sequence of the selected organism stored in the database Browser (https://genome.ucsc.edu/) can be used. The quality of the generated DNA structure affects the structural properties of the resulting demonstrator. The final prepared structure usually consists of atomic coordinates saved in the common format used in molecular simulations, e.g. PDB.

### Enlargement:

3D structure is scaled up by a factor of 1 : 10,000,000 to 1 : 30,000,000.

### Scaling:

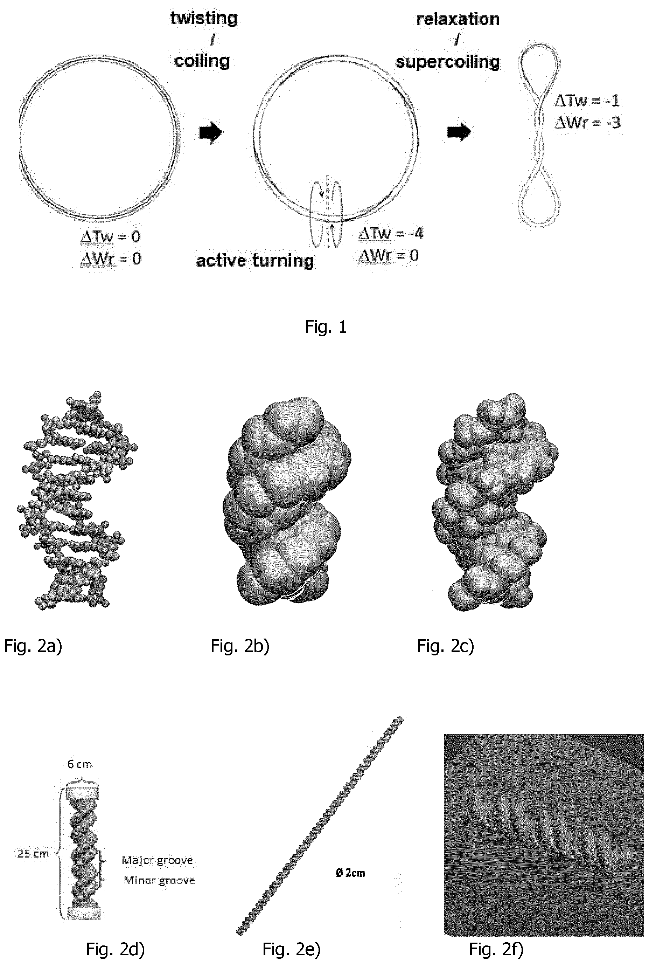

Atoms of DNA molecule are represented by partially overlapping spheres with the corresponding van der Waals radii. To create the self-supporting structure of the demonstrator, it is necessary to increase the diameter of the atoms so that the inner gaps and voids are filled, while the scale of the atom dimensions can be adjusted with a defined scaling factor, ensuring the model's massiveness and structural strength, as illustrated on figures 2 a) to c), where scales 1, 2 and 3, respectively, are shown. With big scaling factors, the nuances of double-helix structure are lost, and therefore it is reasonable to choose the scaling factor taking into account preserving the structural characteristics of the double-helix. For this purpose, the structure having .PDB format is opened in the free software for the molecular structures' visualization, for example in Chimera. Radii/diameters of the atoms are rescaled.

### Conversion:

Displayed scene from the previous step is saved, e.g. in .STL format, what is the format used by the software for 3D printing.

### Printing of the model for the mould:

The enlarged and rescaled 3D DNA structure is printed on a 3D printer and thus the model is generated. The material used for the model production can be PLA, PETG, ABS, PC, NYLON (any material suitable for printing on 3D printer). Preferably, the material used in the model production is polylactic acid (PLA) (polymer of 2-hydroxypropane acid), which is inherently inflexible. It is only about creating a model for the mold for the resulting demonstrator. Handles can also be advantageously printed onto the DNA structure for better grip when handling the demonstrator.

### Creation of the mould:

The mould is created from the printed model. The material for producing the mould can be silicone (for example Lukoprén) or polyurethane rubber. The polyurethane rubber is more expensive and more durable and thus enabling production of 200-300 casts. On the other hand, the mould from Lukoprén is cheaper but wears faster. The resulting demonstrator will be cast into this mould.

### Producing the demonstrator:

Subsequently the demonstrator itself is cast. The demonstrator's material is elastic material having, at temperature of 25 °C, the flexural modulus *E_{F}* in the range from 0.1 MPa to 100 MPa, the shear modulus G(modulus of rigidity) 10-times lower, with the deviation of +/- 10 %, in relation to the flexural modulus of elasticity and the tensile modulus Ein the range calculated according to the formula *E= G*(2+2*v*) from range of shear modulus *G*. Preferably it is silicone, caoutchouc, natural latex, rubber, polyurethane rubber, styrene butadiene rubber, thermoplastic elastomers, nitrile butadiene rubber, polyethylene vinylacetate, acrylonitrile butadiene styrene, polyisoprene or ethylene propylendiene monomer, soft PVC, or any combination thereof. The material, which can be cast into moulds, has to be used. Such material enables the demonstrator to reproduce the proportion between the twisting and writhing (Tw:Wr) corresponding to 1 : 3, similarly as in the DNA molecule.

Preferably, the mould is treated by the silicone spray before the demonstrator casting, in order to prevent the gluing of the mould with the cast of the final demonstrator.

The range of the elasticity characteristics of the material is determined by the intended using as a teaching aid (educational tool) or as a toy, which can be manually manipulated and deformed, via bending or twisting. Suitable range of applicable torques is 0.01 Nm - 20 Nm. These forces are used during everyday activities, such as turning of a key in a lock, using of a pepper-grinder, tightening of a screw by a screwdriver, opening of water taps, or opening a jar.

The torsional stiffness is associated with the shear modulus as *G* = 32*T·L*/π·*ϕ·D*⁴, where Tis torsional force, *L* is the length of the demonstrator model, *D* is diameter and *ϕ* is deformation expressed as the angle of the mutual rotation of the object's ends. The ideal deformation of the demonstrator is derived from the biophysical behavior of DNA molecule, and this behavior should be reproduced by the demonstrator as a simulation of relation between structural and mechanical properties. Biologically, DNA superhelix achieves values about σₛ= 6 ± 6 % (i.e. 0-12 %), which means about 6 additional turns of DNA double-helix. With the demonstrator model having the width of 6 cm (figure 2f) the model has *N*ₜᵤᵣₙ = 3½ of the full DNA turning, wherein one DNA turn is defined as a turning of the helix strands by 360 angular degrees around the longest axis of symmetry along the inertial axis x, while the coordinates *y* and *z* return to the original values. With the said physical value of the supercoiling of 6 % the ideal deformability is *ϕ* = σₛ ·*N*_{turn.} ·2· π = 0,56 ± 0,56 Rad = 32 ± 32 degrees of 0.5-1 ± (0.5-1) Rad. With the diameter of the demonstrator's body of 6 cm, the ideal materials for obtaining of the required angular deformation have the shear modulus up to *G* = 0.5 MPa. With the long form of the demonstrator having the body diameter of 2 cm it is possible to obtain required deformation by turning with fingers also in the case of materials having the shear modulus in the range from *G* = 1 MPa to 10 MPa.

In the case of bending deformation, DNA molecules have the persistence length of 50 nm, or 130-150 base pairs (bp). This length characterizes the distance, at which the molecule appears to be arranged in certain direction. With the lengths over this value, the molecule can spontaneously self-cross, even in the absence of superhelicity and torsional forces. With the demonstrator having the length of 25 cm and the diameter of 6 cm, as illustrated on Figure 2f, the demonstrator represents 3 and half of the whole DNA turns. The equivalent persistence length of the demonstrator corresponding to the scaled up physical persistence length of DNA is 2.5 m. Within this length the demonstrator should not spontaneously bend by more than 180 angular degrees, it means that within the length of 25 cm the demonstrator should not bend by more than 18 angular degrees. The bending of the demonstrator's body should be possible with bare hands, and thus should be in the range of the bending forces encountered during everyday activities, using the force about 10 N.

The demonstrator under the load of 10 N force behaves as follows: It is necessary to rescale DNA bending elasticity, *E*_{b}, to the macroscopic dimensions, such as *E*_{b} = 4·*L*_{P}·k_{B}· *T*/ *r*⁴, where *L*_{P} is persistence length (2.5 m), k_{B} is Boltzmann constant, Tis thermodynamic temperature and ris radius of the demonstrator (r = d/2 = 3 cm), *E*_{b} = 60 GPa. Upon the bending of DNA in its macroscopic size, keeping its persistence length of 50 nm, therefore the force of 10 N result in the deformation *θ* = 4 *F L*³/3 π·*r*⁴·*E*_{b} = 75 angular degrees, where Fis bending force (10 N), *L* is the demonstrator length (25 cm), ris the demonstrator radius (r = d/2 = 3 cm) and *E*_{b} is the molecule elasticity rescaled to the size of the macroscopic demonstrator object. Maximal flexural modulus is *E =* 64·*M·L*/π·*d*⁴·*θ*, which is the modulus of the materials used for the production of the demonstrator for the given demonstrator width *d*(e.g. *r = d*/2 = 3 cm), bending force *M*(10 N), deformation angle *θ* (calculated for the given width and length of the above demonstrator as 61 GPa). Flexural modulus is 7 MPa, while the suitable values are in the orders of 0.1 MPa - 100 MPa in such a case, when the values of the flexural modulus are not more than 10-times higher than the values of the modulus, which would result in inability of the torsional forces to bend the helically wound DNA strands sufficiently to demonstrate writhing and supercoiling. Concerning the mechanical characteristics, such as the compressive modulus of elasticity and the tensile modulus, these are partially associated with the other mechanic moduli, because the demonstrator is made from the amorphous material having isotropic characteristics, and the precise reduction of the sterical interactions between the atoms of the base pairs, where the DNA strand is anisotropic on the atomistic level, is not the objective of the invention. Ideally, the material will enable stretching or compressing up to 40 % of the demonstrator length in relation to the undisturbed state.

The properties of the DNA molecule, which can be showcased/demonstrated on the reversibly deformable DNA demonstrator according to the present invention, are described in more detail below:
1. DNA bending stiffness:
   DNA shows bending resistance, the characteristic known as the bending stiffness. The bending stiffness defines, how easily DNA can be deformed or bent in reaction to outer forces, interactions with proteins, or during dense packing in nuclei of cells.
2. DNA torsional stiffness:
   The torsional stiffness relates to the DNA's resistance to twisting along its axis. Since DNA molecules are spiral-shaped as a right-handed double helix, the torsional deformations are asymmetric. This asymmetricity helps to control the levels of overwinding or unwinding of the DNA, which plays biologically vital role. The torsional stiffness is essential for maintaining DNA compactness during processes such as replication, transcription and DNA packing in cell nuclei.
3. Twist and writhe.
   The terms twist and writhe describe various aspects of the overall DNA coiling and winding. Writhe refers to the number of DNA helix turns per unit of length and represents the intrinsic rotation of DNA molecule, whereas the twist relates to the DNA's torsional stress and the changes of the intrinsic DNA coiling due to twisting.
4. Total linking number:
   The total linking number is a topological DNA property quantifying the total twisting and writhing of DNA strands. It represents the number by which one DNA strand turns around another DNA strand in the closed circular DNA molecule. Changes in DNA topology, such as during the DNA replication and recombination, translate into changes in the total linking number.

### Development of the models for molecular simulations.

Modeling includes a set of activities before simulation, i.e., before sending of the model to a computer performing calculations resulting in the simulation. Modeling includes ideas, tests, setting up systems of equations, testing and forming of notion. The demonstrator according to the present invention is the missing aid for mathematical and computer modeling of DNA. In DNA modeling, so called coarse-grained approach is often used, in which approach some structural details are disregarded, in order to save the valuable calculation time. Upon investigating of the processes on DNA, we are often interested in time and length dimensions in the ranges of seconds and thousands of base pairs. Molecular simulations that distinguish the structure at the atomic level (atomistic models) would consume a lot of computational time to compute information about atomic movements and bonds vibrations, which is not essential for studying of biological processes on DNA. The coarse-grained approach enables focusing to the area of interest. Using of the coarse-grained approach is possible due to the discovery of the scaling rules in the polymer physics. The generation of coarse-grained models requires a certain level of abstraction of the problem

The demonstrator (teaching aid, educational tool, interactive model or toy) with the above characteristics will allow users to get DNA molecule shape in hands, and thus help to raise awareness about look and behavior of DNA.

The demonstrator according to the present invention can be used for the illustration (demonstration) of the supercoiling of DNA, particularly with the DNA demonstrator having longer length from one meter to two meters, while the DNA demonstrator keeps the proportions between the individual structural components of DNA molecule. Using this DNA demonstrator enables the demonstration of the supercoiling, e.g. the supercoiling in bacterial DNA, and it can also demonstrate the geometric specificity of the crossing in the knots. The supercoiling inherently has chiral properties based on the direction of winding of the whole double-helix around itself. To conserve the topology and to maintain the supercoiling, it is necessary to fix the ends of the demonstrator and prevent their rotation around the axis. This can be achieved either by the strongly holding of the demonstrator ends, or by their interconnection to the circle, as shown on Figure 1. Upon the supercoiling, a plectonemic structure is generated (Figure 1, right). Although the geometry of the crosses of the plectonem is identical as in case of the dextrorotatory positively wound DNA double-helix, when the strands direction is followed the winding direction in the plectonem is inverted on its end in so-called apical tip. Therefore, in accordance with the mathematic formalism the orientation of the dextrorotatory supercoiling is negative and the orientation of the levorotatory supercoiling is positive. It is known from the biology that the positive supercoiling is very harmful, because it results in the overwinding of the DNA helix hinders action of biological processes. On the other hand, the negative supercoiling stabilizes DNA double-helix, participates to the chromosome organization, but in larger extent can lead to melting of DNA. This characteristic can be illustrated by the long model of the demonstrator, which will particularly enable to showcase, how DNA turns behave in presence of positive and negative supercoiling.

Where dextrorotary (+) direction of rotation means counterclockwise direction, and where levorotary (-) direction of rotation means clockwise direction.

### Brief Description of Drawings

Figure 1 shows the structural characteristics of DNA. The relationship between twisting and writhing.
Figures 2a) to 2c) show 3D model of DNA in the computer with the atom scale of 1, 2 and 3;
Figures 2d) to 2e) show DNA model with the measurements for 3D printing;
Figure 2f) shows DNA model generated from the sequence of base pairs, with scaling of 3.
Figures 3a) to 3f) show the prior art.
Figure 4a) shows the demonstrator according the present invention, where the underwound DNA with open turns are represented and DNA is stretched.
Figure 4b) shows the demonstrator according to the present invention, where the relaxed B-DNA is illustrated without the stressing by external forces.
Figure 4c) shows the demonstrator according to the present invention, where the supercoiled DNA is illustrated, which is more compact.

### Examples

### Example 1

Figure 1 schematically shows the demonstrator according to the present invention, where the behavior of DNA molecule during winding and supercoiling in various phases is illustrated. Structural behavior of DNA is characterized by twist number Tw and writhe number Wr. In the first phase ΔTw = 0 and ΔWr = 0. In the second phase upon the active turning DNA molecule is twisted and ΔTw = -4 and ΔWr = 0. Number ΔTw = -4 represent four twists of the molecule, the sign "-" represents the turning direction. Writhe is not present (ΔWr = 0). In the last phase, the supercoiling is generated, by which DNA molecule is wound even more, and ΔTw = -1 and ΔWr = -3. Upon supercoiling three writhes of the DNA molecule model around itself were generated, representing ΔWr = -3. The sign "-" also represents the turning direction. The twist ΔTw = -1 represents a shear deformation of the material in which the ends are twisted 360 angular degrees in a counterclockwise (levorotatory) direction relative to the relaxed state. The ring topology symbolizes that the ends are fixed during twisting, for example they are firmly held by hands, so the total linking number is conserved

### Example 2

Figures 2 a) to 2 f) show the computational models of DNA structure. The proportions among the individual structural features of DNA are kept preserved on all figures. Figures 2 a) to 2 c) show DNA molecule (bacterial DNA) downloaded from the database https://www.nakb.org/atlas=8RM7, shown in the scales of 1 (Figure 2a), 2 (Figure 2b) and 3 (Figure 2c). Upon the scale enlargement the individual DNA components/parts are moved closer to each other, in order to ensure the self-support of DNA model. Tw : Wr ratio is 1 : 2.

### Example 3

The demonstrator produced according to the computational model shown on Figure 2d) represents DNA molecule generated by the means of the online tool available athttp://www.scfbio-iitd.res.in/software/drugdesign/bdna.jsp#. It is made from polyurethane rubber and has the length of 25 cm. The diameter of the DNA demonstrator is 6 cm. Handles are attached both to the first and the second ends of the DNA demonstrator.

### Example 4

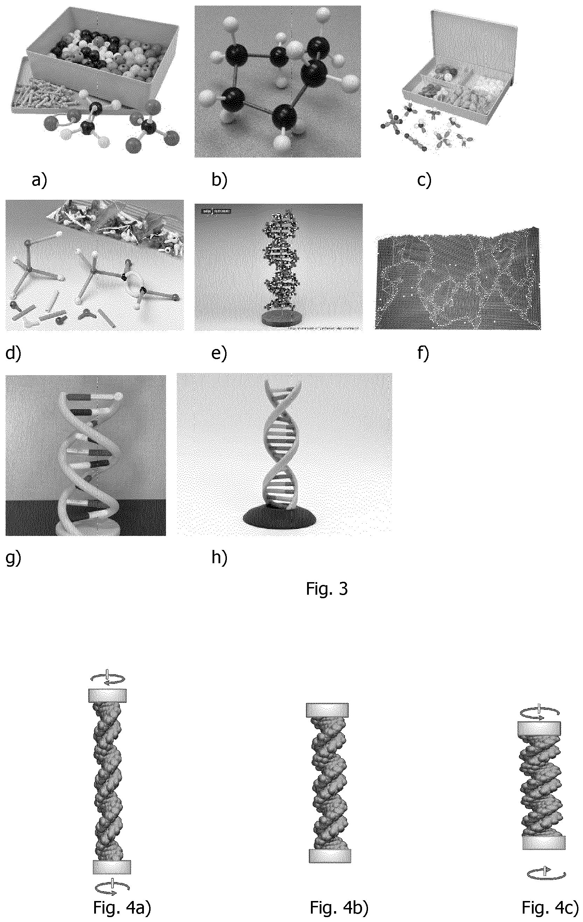

Figure 4 shows the demonstrator. DNA molecule was downloaded from the free databasehttps://www.rcsb.org/structure/1bna. After the downloading of DNA in .PDB format the size of the individual parts of DNA molecule was rescaled by the means of Chimera software for the visualization of the molecular structure, using the command "vdwdefine". The scale of 1.5 was used. The individual overlapping spheres represent the atoms of chemical elements forming the chemical structure of DNA double-helix. The diameter of the individual spheres representing the individual parts of DNA molecules is in the ratio of 1 : 30,000,000 in relation to van der Waals radii multiplied by the scaling factor of 1.5. Van der Waals radii are 0.12 nm, 0.17 nm, 0.152 nm, 0.155 nm, 0.18 nm for hydrogen, carbon, oxygen, and nitrogen, respectively. Upon using of the scaling factor of 1.5, the diameters of the spheres on the demonstrator model are 0.12 nm * 30,000,000 * 1,5 = 1.08 cm for hydrogen, 1.53 cm for carbon, 1.09 cm for oxygen, 1.39 cm for nitrogen and 1.62 cm for phosphorus. The output of the molecular structure was saved in .STL format for printing on 3D printer. The model for creation of the mould for the casting of the final demonstrator was printed on 3D printer from PLA (polylactic acid). The height of the model is 25 cm and its diameter is 6 cm. The mould for casting is made from silicone. The demonstrator was produced by the casting of silicone with its crosslinker into the mould and by its solidification. The handles, which were also produced using 3D printer, were attached to both ends of the finished demonstrator. The demonstrator's dimensions are the same as the dimensions of the model.

### Comparative Example

Figures 3 a) to 3 f) show the prior art DNA models:
a) molecular building set; b) building set known at our schools; c) molecular building set which includes electron orbitals; d) classical stick-and-ball molecular kit; e) DNA model; f) packing model from metal balls used for the study of atom arrangement (here the arrangements in metals); g) DNA model having the correct base number, but incorrect winding direction, and does not distinguish between the major and minor grooves; h) DNA model having the correct winding direction, but the double number of bases, and also show only the half-turn of the DNA. From the depicted images, it is evident that the mentioned models cannot represent the properties of DNA as effectively as the demonstrator according to this invention.

### Example 5

The reversibly deformable DNA demonstrator was produced by the following method:
The suitable DNA sequence of human genome and dataset Human (GRCh38/hg38) was selected from the online database at https://genome.ucsc.edu. The selected DNA was enlarged in the proportion of 1 : 15,000,000. The diameter of the atoms in 3D structure of the DNA molecule was enlarged by the application of the scaling factor of 1.5. Therefore, the width of the 3D structure was 3 cm. The length of the 3D structure was limited to 6 turns representing the length of 27 cm. Obtained 3D structure was printed on the 3D printer providing the model for the mould. Based on the model, the aluminum DNA demonstrator mould was manufactured using CNC machining. The mould was open on one side and closed on the other side - lacking one base (mould A). Similarly, another aluminum mould, open on both sides - without the circular base (mould B) - was created. Both moulds are divided in the direction along the longitudinal axis into two mutually interlocking halves (two semi-cylinders).

The mixture of the thermoplastic elastomer was prepared by the following method: Cold plastic-forming PVC was mixed with the softener (acetyl tributyl citrate) in the proportion of 100 weight parts of PVC to 80 weight parts of softener. The mixture was homogenized (by mixing) and left for 2 hours under vacuum (to foam elimination, in order to remove the absorbed air).

Subsequently the mass was cast into the mould A. The filled mould A was warmed to the temperature of 140 °C and maintained at this temperature for 10 minutes, in order to generate the reversibly deformable DNA demonstrator. After cooling to the room temperature the mould A was opened, the demonstrator was removed and lengthened by the mould B, in such a way that the last turn of the demonstrator was placed into the first turn of the mould B. Thus, the end of the cast demonstrator formed the bottom of the mould B. By pouring the material into the mould B, heating, holding, and cooling the demonstrator was extended. After cooling, mould B was opened, and the demonstrator was again extended by mould B. By the pouring the material into the mould B, heating, waiting, and cooling the demonstrator was extended again. This step was repeated until the total length of the demonstrator reached 30 meters.

### Example 6

DNA molecule was downloaded from the free databasehttps://www.rcsb.org/structure/1bna. After downloading of .PDB format of DNA structure, this structure was enlarged in the proportion of 1 : 30,000,000 by the means of Chimera software for the visualization of the molecular structures; and the diameter of the atoms in 3D structure of the DNA molecule was scaled up by the application of the scaling factor of 1.5, therefore the width of 3D structure was about 6 cm. The length of the 3D structure was limited to 6 turns, representing the length of 54 cm. The output of the molecular structure was saved in .STL format for printing on the 3D printer.

The ends of the structure were modified to create a standard type of the non-detachable joint as follows: one end was modified as "plug" and the other one as "socket". Subsequently, a negative silicone model of the DNA molecular structure was produced using a 3D printer, thus producing a mould. Silicone was then injected into the mould and allowed to be solidified. The demonstrator was removed after the opening of the mould. Using this mould, 45 demonstrators were produced. These were subsequently connected via a plug-socket mechanism, wherein the end of one demonstrator was joint with the start of the other demonstrator. Thus, the demonstrator having the length of 24 m was produced.

## Claims

1. A reversibly deformable DNA demonstrator, **characterized in that** it comprise a body in the form of 3D double-helix structure representing a part of DNA molecule, where the body contains an elastic material that, at the temperature of 25 °C, has a shear modulus of *G* ranging from 0.1 MPa to 50 MPa, with a ratio of transverse deformation to longitudinal deformation expressed by Poisson's constant *v* in the range of 0.3 to 0.5, and wherein the elastic material is in the form of a set of touching and/or at least partially overlapping spheres representing atoms of the DNA molecule, for ensuring of the demonstrator self-supporting.

2. The reversibly deformable DNA demonstrator according to claim 1, **characterized in that** the demonstrator has the width to length ration of one turn in 3D double-helix structure being in the range from 1:1.4 to 1:1.8.

3. The reversibly deformable DNA demonstrator according to claim 1 or claim 2, **characterized in that** the percentage of the overlap of the individual adjacent spheres is 5 % to 90 %, preferably 20 % to 80 %, the most preferably 50 % to 70 %.

4. The reversibly deformable DNA demonstrator according to any one of preceding claims, wherein the body consists of at least 90 % of elastic material, preferably 100 % of elastic material.

5. The reversibly deformable DNA demonstrator according to any one of preceding claims, **characterized in that** it contains at least one handle fixed at one end of the body to facilitate the manipulation, preferably it contains two handles, one at each end of the demostrator's body.

6. The reversibly deformable DNA demonstrator according to any one of preceding claims, **characterized in that** the body is made from silicone, caoutchouc, natural latex, rubber, polyurethane rubber, styrene butadiene rubber, thermoplastic elastomers, nitrile butadiene rubber, polyethylene vinylacetate, acrylonitrile butadiene styrene, polyisoprene, ethylene propylendiene monomer or any combination thereof.

7. The reversibly deformable DNA demonstrator according to any one of preceding claims, **characterized in that** the body has the length of 10 cm to 3,000 cm and the diameter of 0.5 cm to 7 cm, and the ratio of width to length of one turn of 1:1.6.

8. The reversibly deformable DNA demonstrator according to claim 7, **characterized in that** the body has the length of 20 cm to 30 cm, preferably 25 cm, and the diameter of 5 cm to 7 cm, preferably 6 cm, and it consists of the material having the shear modulus in the range of *G* = 0.1 MPa to 1 MPa, preferably *G* = 0.1 MPa to 0.5 MPa.

9. The reversibly deformable DNA demonstrator according to claim 8, **characterized in that** the body has the length of 100 cm to 200 cm, preferably 150 cm, and the diameter of 1 cm to 3 cm, preferably 2 cm, and it consists of the material having the shear modulus in the range of *G* = 1 MPa to 50 MPa, preferably *G* = 1 MPa to 10 MPa.

10. A method of producing the reversibly deformable DNA demonstrator, **characterized in that**, it comprises the following steps:
- selection of a 3D structure of the DNA molecule double-helix;
- the selected 3D structure is enlarged in the ratio from 1 : 10,000,000 to 1 : 30,000,000, and the diameter of the atoms in 3D structure of the selected DNA molecule is enlarged by the application of the scaling factor in the range from 1 to 3, preferably 1.5;
- optionally, the DNA structure format is converted to the format suitable for 3D printer;
- the reversible deformable DNA demonstrator is produced by 3D print.

11. The method of producing the reversibly deformable DNA demonstrator, **characterized in that**, it comprises the following steps:
a. selection of the 3D structure of the DNA molecule double-helix;
b. the selected 3D structure is enlarged in the ratio from 1 : 10,000,000 to 1 : 30,000,000;
c. the diameter of the atoms in 3D structure of the selected DNA molecule is enlarged by the application of the scaling factor in the range from 1 to 3, preferably 1.5;
d. optionally, the DNA structure format is converted to the format suitable for 3D printer;
e. the enlarged and rescaled 3D structure is printed on the 3D printer providing a model for a mould for the production of the reversible deformable DNA demonstrator;
f. the mould for the production of the reversibly deformable DNA demonstrator is created;
g. the reversibly deformable DNA demonstrator is produced by the casting or injecting into the mould.

12. The method of producing the reversibly deformable DNA demonstrator, **characterized in that**, it comprises the following steps:
- selection of the 3D structure of the DNA molecule double-helix;
- the selected 3D structure is enlarged in the ratio from 1 : 10,000,000 to 1 : 30,000,000, and the diameter of the atoms in 3D structure of the selected DNA molecule is enlarged by the application of the scaling factor in the range from 1 to 3, preferably 1.5;
- optionally; the DNA structure format is converted to the format suitable for 3D printer;
- the enlarged and rescaling negative model of the DNA structure is printed, providing a mould for the reversibly deformable DNA demonstrator;
- the reversibly deformable DNA demonstrator is produced by the casting or spraying into the mould.

13. The method of production according to claim 11 or claim 12, **characterized in that** before the 3D printing step, the ends of the model structure are modified to create a "plug-socket" type connection, and after the set of reversibly deformable DNA demonstrators is created from the mold, they are serially connected.

14. The method of production according to claim 12 or claim 13, **characterized in that** in the step of the production of the mould for the reversibly deformable DNA demonstrator a mould A - closed or without one base, is generated, and a mould B - open at one side or at both sides, is generated, wherein mould A is used for the demonstrator production and the produced demonstrator is extended by mould B in such a way, that the end of the produced demonstrator forms the base of the mould B, and the demonstrator is made longer by the subsequent pouring or injecting of the material into the mould B, wherein the step of the casting into the mould B is preferably repeated by several times.

15. The method of production according to any of claims 10 to 14, **characterized in that** the material of demonstrator is elastic material having, at temperature of 25 °C, the shear modulus *G* = 0.1 MPa to 50 MPa, with the ratio of the cross deformation to the longitudinal deformation expressed via Poisson constant *v* in the range of 0.3 to 0.5, wherein preferably the material is silicone, caoutchouc, natural latex, rubber, polyurethane rubber, styrene butadiene rubber, thermoplastic elastomers, nitrile butadiene rubber, polyethylene vinylacetate, acrylonitrile butadiene styrene, polyisoprene, ethylene propylendiene monomer or any combination thereof.
